# EUROPEAN PATENT SPECIFICATION

(11) **EP 1 645 360 B1**
(45) Date of publication and mention of the grant of the patent: **05.09.2007**
(21) Application number: 05020964.2
(22) Date of filing: 26.09.2005
(51) Int. Cl.: B23Q 7/04

(54) **Spindle pickup lathe**
Vertikaldrehmaschine mit Aufnehmen des Werkstücks durch die Spindel
Tour avec prise de pièce par la broche

(30) Priority: 08.10.2004 JP 2004296066
(43) Date of publication of application: 12.04.2006
(73) Proprietor: MURATA KIKAI KABUSHIKI KAISHA, Minami-ku Kyoto-shi Kyoto 601 (JP)
(72) Inventor: Kawai, Hiroshi, Kani-shi Gifu (JP); Takasu, Yukiyoshi, Inuyama-shi Aichi (JP)
(74) Representative: Liedl, Christine

(56) References cited:
- EP-A- 1 386 691
- DE-A1- 10 117 302
- DE-A1- 19 818 663

## Description

### Field of the Invention

The present invention relates to a spindle pickup lathe in which a spindle moves to convey a work, and in particular, to a structure for loading a material onto the spindle pickup lathe and unloading a finished product from the spindle pickup lathe, according to the preamble of claim 1 (see, for example, DE-10117302-A).

### Background of the Invention

A vertical spindle moving lathe, that is, a spindle pickup lathe has been proposed in which a spindle chuck conveys a work while facing downward and which is provided with one work rest (The Unexamined Japanese Patent Application Publication (Tokkai-Hei) No. 11-320314). A lathe of this kind advantageously eliminates the need for a loader that load a work at a spindle position. This makes it possible to simplify the configuration.

In the proposed example, the spindle moves beyond the movement area required for machining and onto the work rest. Consequently, the movement area for the spindle must be enlarged, thus requiring the width of the lathe to be increased. Further, the work rest is placed away from the machining position. Accordingly, the spindle gripping the work returns from a position on the work rest to the machining position over a long distance. The time required for the movement increases a cycle time for machining of the work. Since only one work rest is provided, a series of operations are required in which the spindle discharges a finished product from the work rest, loads a material onto the work rest, and then grips the material. Thus, the time required to replace the finished product with the material is added to the cycle time. This also increases the cycle time required to machine the work.

It is an object of the present invention to provide a spindle pickup lathe which allows a reduction in the width of the lathe and in the time required to supply and discharge a work. It is another object of the present invention to provide a structure suitable for a machining line in which works flow in one direction. It is further another object of-the present invention to provide a compact configuration which allows a work loading device and a work unloading device to be housed in a machine body cover and which has a generally neat appearance.

### Summary of the Invention

The present invention provides a spindle pickup lathe as defined in claim 1.

This configuration is provided with the work loading device and the work unloading device. The rest position switching mechanism enables the work rest to move into and out of the machining area. Thus, the movement range of a headstock is limited to within the machining area. This enables the width of the entire lathe to be reduced. Further, the work is loaded onto and unloaded from the lathe by moving the work rest into and out of the machining area and moving a spindle, and this reduces the distance that the spindle moves to load or unload the work onto or from the lathe. Further, movement of the work rest can be carried out concurrently with movement of the spindle, and this reduces the time required to load or unload the work onto or from the lathe. The work loading device and the work unloading device are provided at different positions. It is thus unnecessary to wait for a finished product to be unloaded from the lathe before the work loading device can load a material onto the work rest. Whenever the work rest is out of the machining area, the work can be loaded onto and unloaded from the work rest. This makes it possible to reduce the time required to supply and discharge the work.

The work loading device and the work unloading device may be arranged on respective sides of the machining area in the lateral direction. When the work loading device and the work unloading device are arranged on the respective sides of the machining area in the lateral direction, this structure is suitable for a machining line in which work flow in one direction.

In the present invention, the generally rectangular machine body cover may be provided which covers the machining area. The concave portion may be formed which extends from each lateral end to center of the machine body cover. The work loading device and the work unloading device may be arranged within the width of the machine body cover. The work rest can be moved into and out of the concave portion. In this configuration, since the work loading device and the work unloading device are arranged within the width of the machine body cover, a compact configuration is obtained which has a generally neat appearance. Further, the work rests of the work loading device and work unloading device can be moved into and out of the respective concave portions. Consequently, the work can be supplied to or discharged from the lathe simply by supplying or discharging the work to or from the concave portion in the machine body cover. Therefore, the work can be easily supplied and discharged.

The spindle pickup lathe in accordance with the present invention comprises the spindle chuck that supports a work so that the work faces downward, the tool supporting means provided in the machining area to machine the work supported by the spindle chuck, the spindle moving means for moving the spindle chuck in the vertical direction and in the lateral direction, and the work loading device and the work unloading device provided at the different positions in the area in which the spindle chuck moves in the lateral direction. Each of the work loading device and the work unloading device comprises the work rest and the rest position switching mechanism that switches the position of the work rest between the interior and exterior of the machining area. The spindle chuck moves in the vertical and lateral directions to pick up the work from the work loading device, subjects the work to machining carried out by the tool supporting means, and delivers the work to the work unloading device. This makes it possible to reduce the width of the lathe as well as the time required to supply and discharge the work. If the work loading device and the work unloading device are arranged on the respective sides of the machining area in the lateral direction, the lathe has a structure suitable for a machining line in which works flow in one direction. The spindle pickup lathe can further be configured as follows: the generally rectangular machine body cover is provided which covers the machining area; the concave portion is formed which extends from each lateral end to center of the machine body cover; the work loading device and the work unloading device is arranged within the width of the machine body cover; and the work rest can be moved into and out of the concave portion. This results in a compact configuration having a generally neat appearance. Further, the work can be supplied to or discharged from the lathe simply by supplying or discharging the work to or from the concave portion in the machine body cover. Therefore, the work can be easily supplied and discharged.

### Brief Description of the Drawings

Figure 1 is a perspective view of a spindle pickup lathe in accordance with an embodiment of the present invention.
Figure 2 is a front view of the spindle pickup lathe.

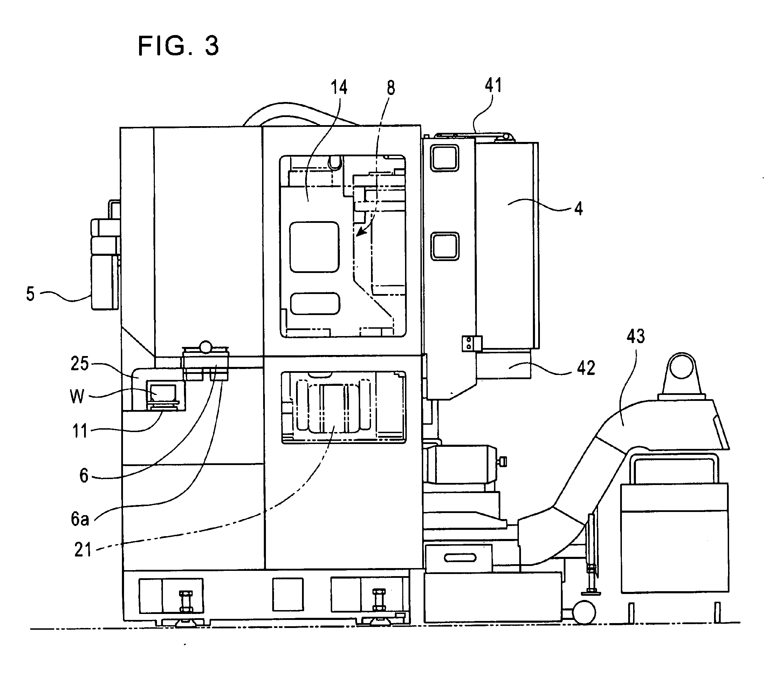

Figure 3 is a side view of the spindle pickup lathe.

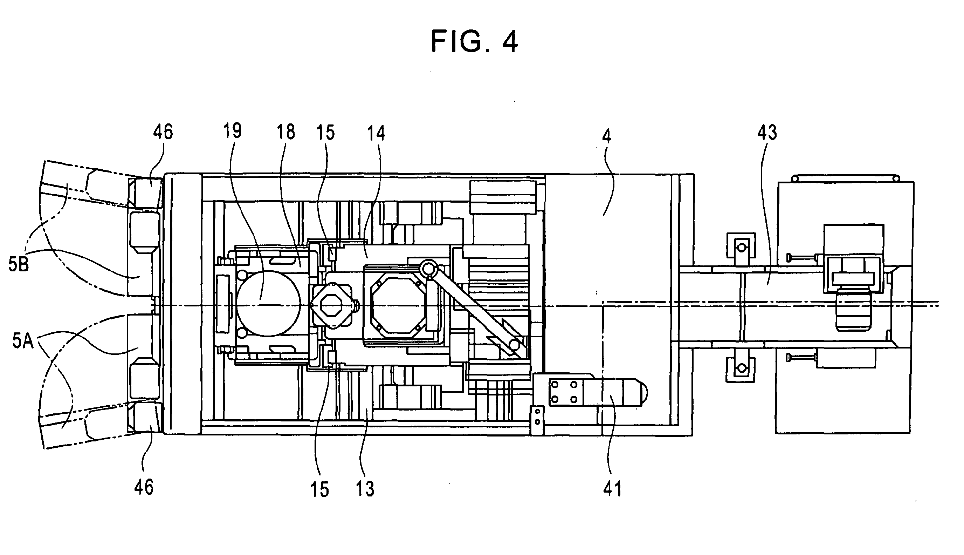

Figure 4 is a plan view of the spindle pickup lathe.
Figure 5A is an exploded front view showing the internal structure of the spindle pickup lathe, and Figure 5B is an exploded side view of the spindle pickup lathe.
Figure 6 is an exploded plan view showing the relationship between both work loading device and work unloading device of the spindle pickup lathe and a headstock.
Figure 7 is an enlarged exploded plan view of the work loading device and work unloading device.

### Detailed Description of the Preferred Embodiments

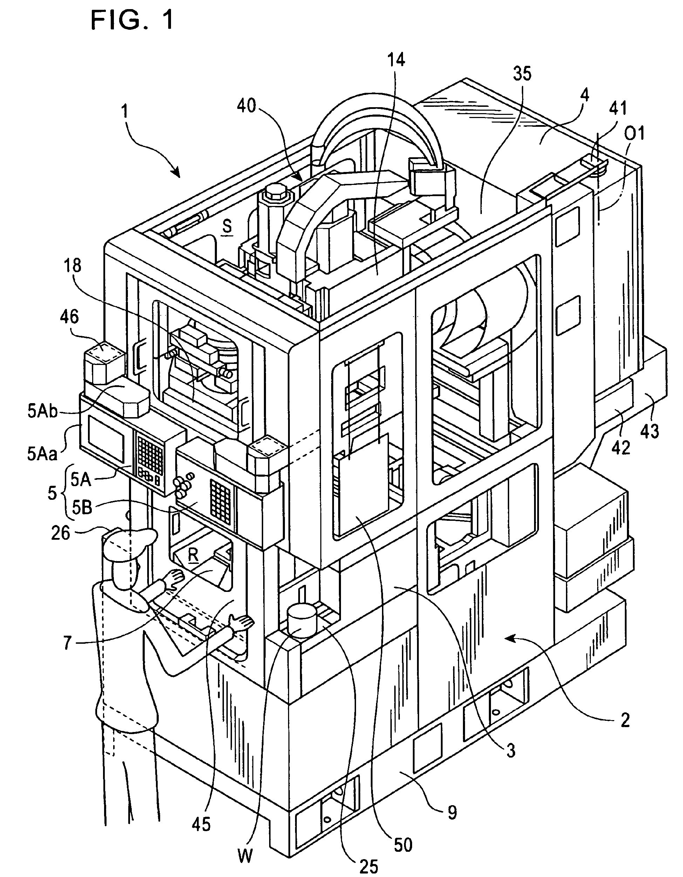

An embodiment of the present invention will be described with reference to the drawings. The embodiment provides a machine tool with a control panel and an operation panel, more specifically, a vertical spindle moving lathe constituting a spindle pickup lathe. In Figure 1, the machine tool, that is, a lathe 1, comprises a machine tool main body 2 comprising a generally rectangular parallelepiped machine body cover 3 having a vertically long rectangular front portion, a control panel 4 installed on a rear surface of the machine tool main body 2, and an operation panel 5 installed in the front portion.

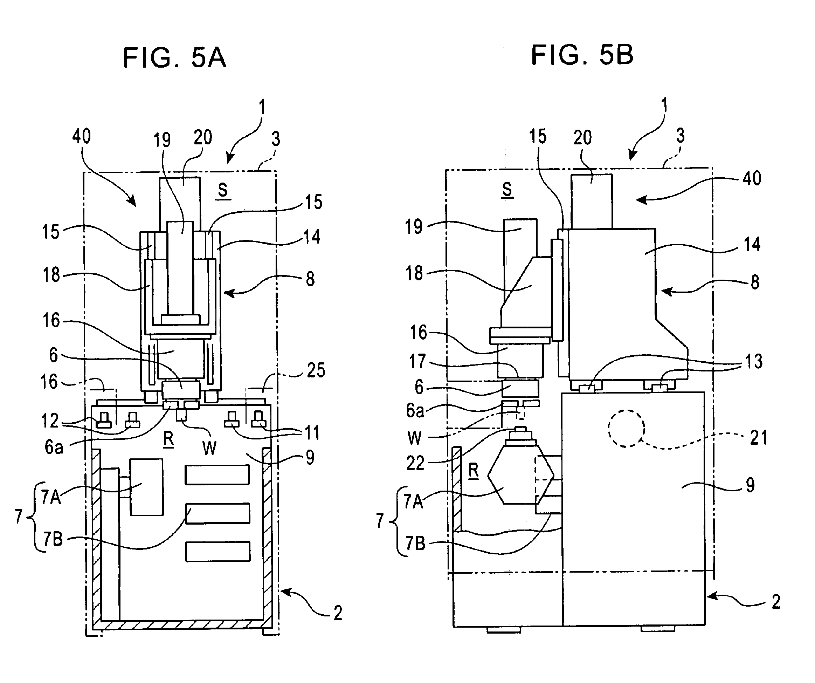

As shown in Figure 5, the machine tool main body 2 comprises a spindle chuck 6 that supports a work W so that the work W faces downward, tool supporting means 7 provided in a machining area R to machine the work W supported by the spindle chuck 6, spindle moving means 8 for moving the spindle chuck 6 in a vertical direction and in a lateral direction, and a work loading device 11 and a work unloading device 12 provided at different positions in an area in which the spindle chuck 6 is movable in the lateral direction. In the machine tool main body 2, the spindle chuck 6 moves in the vertical and lateral directions with respect to a tool in the fixed tool supporting means 7 to carry out mach i n i ng such as turn i ng. Thus, the spindle moving means 8 and its wiring, pipe line, and the like constitute a machining apparatus 40 placed in a machining apparatus installed area S separated from the machining area R.

The spindle moving means 8 comprises a laterally feeding mount 14 that is movable in the lateral direction on a guide 13 extending on a bed 9 in the lateral direction, and a headstock 16 installed on the laterally moving mount 14 via a vertically extending guide 15 so that the headstock 16 can rise and lower freely. The spindle chuck 6 is provided at a tip of the spindle 17 supported by the headstock 16. The spindle chuck 6 grips the work W using a plurality of chucks 6a.

Specifically, the headstock 16 is mounted on a platform 18 installed on the laterally moving mount 14 via the guide 15, and a spindle motor 19 installed on the platform 18 rotatively drives the spindle 17. The headstock 16 is raised and lowered by a raising and lowering driving source 20 such as a motor and a rotation/rectilinear propagation converting mechanism (not shown in the drawings) such as a ball screw, and the raising and lowering driving source 20 is installed on the laterally moving mount 14, and the rotation/rectilinear propagation converting mechanism converts rotation of the raising and lowering driving source 20 into vertical motion. The laterally moving mount 14 is moved in the lateral direction by a laterally moving driving source 21 and a rotation/rectilinear propagation converting mechanism (not shown in the drawings) such as a ball screw,and the laterally moving driving source 21 is installed on the bed 9, and the rotation/rectilinear propagation converting mechanism converts rotation of the laterally moving driving source 21 into lateral operations.

The tool supporting means 7 supports a tool 22 such as a cutting tool or a rotary tool which carries out machining, and the following two types of the tool supporting means 7 are provided: a turret cutter mount 7A and a fixed cutter mount 7B. The turret cutter mount 7A is installed on a side wall of the main body which is located in the machining area R in front of the bed 9, and the turret cutter mount 7A can be turned around a horizontal axis extending in the lateral direction. The turret cutter mount 7A can perform a pivoting operation required to index a tool attached to its peripheral surface. However, the turret cutter mount 7A does not having a moving function. The fixed cutter mount 7B is fixedly installed on a front surface of the bed 9 in the machining area R.

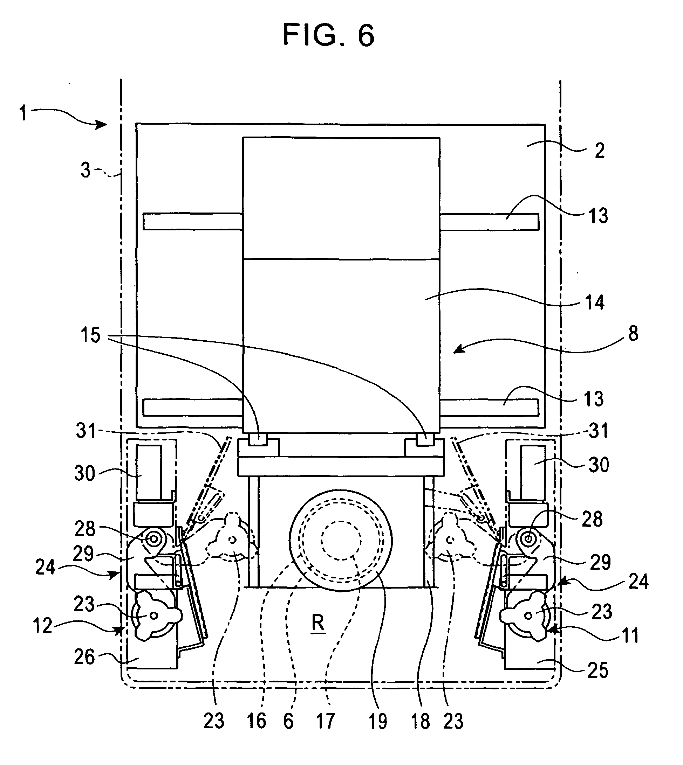

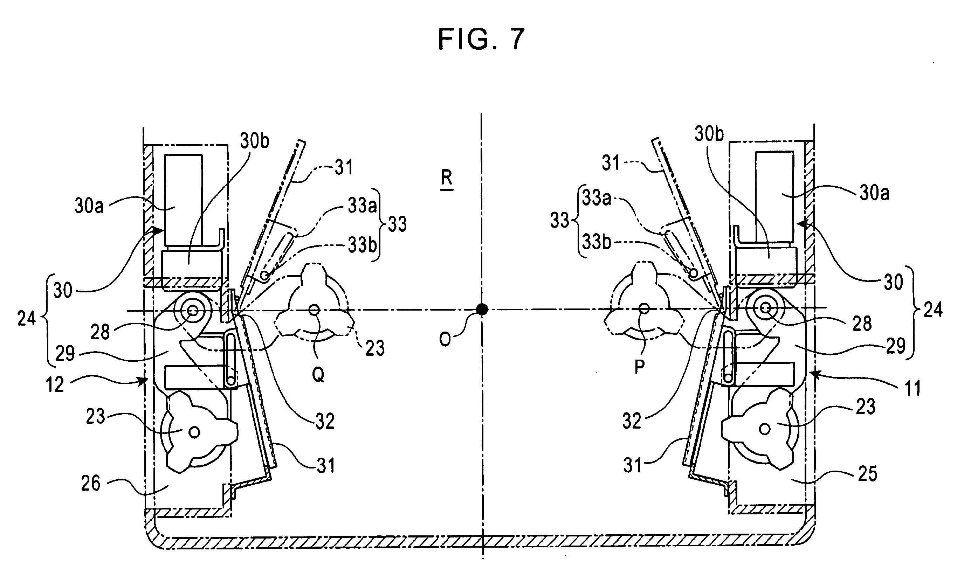

As shown in Figures 6 and 7, each of the work loading device 11 and the work unloading device 12 is comprised of a work rest 23 and a rest position switching mechanism 24 that switches the position of the work rest 23 between the interior and exterior of the machining area R. The work loading device 11 and the work unloading device 12 are arranged on the respective sides of the machining area R in the lateral direction. The spindle chuck 6 moves in the vertical and lateral directions to pick up the work W from the work loading device 11. The work W is then turned by the tool supporting means 7. The spindle chuck 6 then delivers the work W to the work unloading device 12. The following operations are performed in the machining area R after the work rest 23 of the work loading device 11 or the work unloading device 12 has entered the machining area R, and the spindle chuck 6 receives the work W from the work loading device 11 and delivers the work W to the work unloading device 12.

Concave positions 25, 26 are formed at a right and left ends, respectively, of a front surface of the generally rectangular parallelepiped machine body cover 3, and the concave portion 25 constitutes a work loading port, the concave portion 26 constitutes a work unloading port, and the concave portions 25, 26 are recessed from the respective lateral ends toward the center of the machine body cover 3. The work loading device 11 and the work unloading device 12 are arranged within the width of the machine body cover 3. Each of the work loading device 11 and the work unloading device 12 can move into and out of positions where its work rest 23 lies in the concave portion 25, 26 and in the machining area R.

The rest position switching mechanism 24 of each of the work loading device 11 and the work unloading device 12 is composed of a pivoting arm 29 and a driving source 30, and the pivoting arm 29 is supported on the frame of the machine body cover 3 or on the bed 9 so that the pivoting arm 29 can be freely pivoted around a supporting shaft 28 in the horizontal direction, and the driving source 30 pivots the pivoting arm 29 forward and backward through a predetermined angle. The work rest 23 is provided at a tip of the pivoting arm 29. The pivoting arm 29 pivots between a standby position (shown by a solid line in Figures 6 and 7) and a work delivering position P or a work receiving position Q, and in the standby position, the work rest 23 lies within the concave portion 25, 26, and the work delivering position P and work receiving position Q are obtained by pivoting the standby position through substantially 90 degrees. In a longitudinal direction, the work delivering position P and the work receiving position Q are at the same position as that of the axis of the spindle chuck 6. As a result of the above pivoting, when located out of the machining area R, the work rest 23 lies in front of the area in which the spindle chuck 6 moves in the lateral direction.

A driving source 30 for the mount position switching mechanism 24 is composed of a motor 30a and a speed reducing mechanism 30b. The speed reducing mechanism 30b has not only a function for reducing the speed of a motor output but also a speed distribution varying function for varying the speed of the motor so that the pivoting arm 29 moves slowly at the opposite ends of its pivoting range and moves fast in an intermediate position of the range.

The concave portions 25, 26 constitute a work loading port and a work unloading port, respectively, in the machine body cover 3. Each of the concave portions 25, 26 has an opening into and out of which the work rest 23 and the pivoting arm 29 can be moved. The opening is opened and closed using an opening and closing cover 31. The opening and closing cover 31 is installed so as to be pivotable around a pivoting center 32 in the horizontal direction, and the pivoting center 32 is located in the vicinity of the supporting shaft 28 of the pivoting arm 29. An interlocking mechanism 33 allows the opening and closing cover 31 to be opened and closed in unison with the pivoting of the pivoting arm 29. The interlocking mechanism 33 is composed of a slot 33a formed in a bracket portion of the opening and closing cover 31 and an engaging pin 33b provided on the pivoting arm 29 to engage with the slot 33a.

The machining area R in the machine body cover 3 is separated from the machining apparatus installed area S using a slide cover 50 (Figure 1). The machining area R is a space which contains the spindle chuck 6 and the tool supporting means 7 and in which the work W is machined. The machining apparatus installed area S is a space in which the machining apparatus 40 such as the spindle moving means 8 is installed.

In Figure 1, the machine body cover 3 has a rear opening 35 through which the operator can enter the machine body cover 3 in order to, for example, perform a maintenance operation on the machining apparatus 40. The control panel 4 covers the rear opening 35. The control panel 4 is supported by an upper and lower supporting members 41, 42 so as to be rotatively movable around a vertical axis 01 to be opened or closed, and the supporting members 41, 42 extend rearward from the machine body cover 3. The control panel 4 is provided above the machine body cover 3. A chip conveyor 43 is placed below the control panel 4 so that it can be retracted backward.

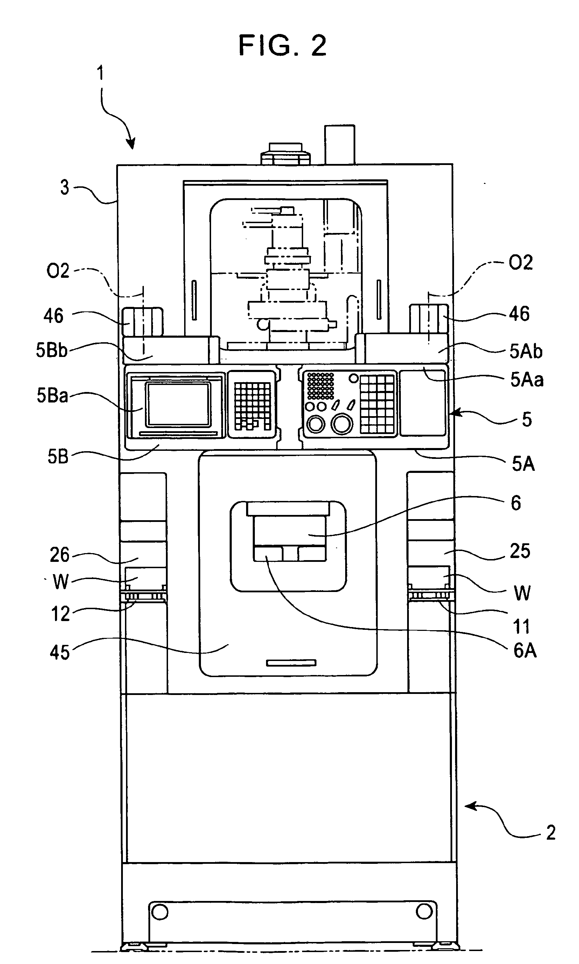

An opening and closing cover portion 45 is formed in the center of front surface of the machine body cover 3 across the width of the front surface. The operation panel 5 can be switched between the position above the opening and closing cover portion 45 and the retracted position where the operation panel 5 has been retracted from the position above the opening and closing cover portion 45. The operator leans the upper part of his or her body into the machine via the opening and closing cover 45 to perform a maintenance operation or the like (arrangements for the chucks and the tool) for the interior of the machine. The operation panel 5 is divided into a left and right divided operation panel portions 5A, 5B. The left and right divided operation panel portions 5A, 5B are composed of divided operation panel portion main bodies 5Aa, 5Ba (Figure 2), respectively, and connection members 5Ab, 5Bb, respectively, having one end rotatively movably connected to the divided operation panel portion main bodies 5Aa, 5Ba and the other end supported by respective brackets 46 on the machine cover 3 so as to be rotatively movable around respective vertical pivoting axes 02.

A description will be given of operations of the lathe 1 configured as described above in which the work W is loaded, unloaded, and machined. The work W is, for example, manually placed on the work rest 23 of the work loading device 11 standing by in the loading concave portion 25 in the machine body cover 3. The pivoting arm 23 of the work loading device 11 pivots to move the work W placed on the work rest 23 into the machining area R. The work W is then moved to the predetermined work delivering position P. The spindle moving means 8 moves the headstock 16 in the lateral and vertical directions to move the spindle chuck 6 to the work delivering position P. The spindle chuck 6 then picks up the work W from the work rest 23.

Subsequently, the pivoting arm 23 of the work loading device 11 retracts to move the work rest 23 back into the concave portion 25. The spindle chuck 6 having picked up the work W moves to the position of the tool 22 of the tool supporting means 7. The spindle chuck 6 moves in the vertical and lateral directions to machine the work W. The retracting operation of the pivoting arm 29 of the work loading device 11 can be performed concurrently with the operation in which the spindle chuck 6 moves to the position of the tool supporting means 7.

Once the machining is completed, the pivoting arm 29 pivots to move the work rest 23 of the work unloading device 12 into the machining area R, and the work unloading device 12 has been standing by in the unloading concave portion 26. The work rest 23 then moves to the predetermined work receiving position Q. The spindle moving means 8 moves the headstock 16 in the lateral and vertical directions to transfer the spindle chuck 6 gripping the finished work W to the work receiving position Q. The spindle chuck 6 then places the work W on the work rest 23. The pivoting arm 29 then pivots to move the work rest 23 on which the work W is placed, to the unloading concave portion 26. Thus, the finished work W present in the unloading concave portion 26 can be, for example, manually unloaded from outside the machine body cover 3.

After placing the finished work W as described above, the spindle chuck 6 moves to the work delivering position P again to receive the next work W. It is possible to perform, at an arbitrary time during machining, the operation of placing the work W on the work rest 23 in the loading concave portion 25. Completion of the machining allows the work loading device 11 to immediately move the next work W to the work delivering position P in the machining area R.

In the spindle pickup lathe 1 configured as described above, the work loading device 11 and the work unloading device 12 are provided as described above. The rest position switching mechanism 23 enables each of the work loading device 11 and the work unloading device 12 to move the work rest 23 into and out of the machining area R. Thus, the movement range of the headstock 16 is limited to within the machining area R. This enables the width of the entire lathe 1 to be reduced. Further, the work W is loaded onto and unloaded from the lathe by moving the work rest 23 into and out of the machining area R and moving the headstock 16. This reduces the distance the headstock 16 moves to load or unload the work W onto or from the lathe 1. Further, movement of the work rest 23 can be carried out concurrently with movement of the headstock 16. This reduces the time required to load or unload the work W onto or from the lathe 1.

The work loading device 11 and the work unloading device 12 are provided at the different positions. It is thus unnecessary to wait for a finished work W to be unloaded from the lathe 1 before the work loading device 11 can load a work W onto the work rest 23. Whenever the work rest 23 is out of the machining area R, the work W can be loaded onto and unloaded from the work rest 23. This makes it possible to reduce the time required to supply and discharge the work W.

The work loading device 11 and the work unloading device 12 are arranged on the respective sides of the machining area R in the lateral direction. This makes it possible to easily construct a machining line in which work W flow in one direction.

Further, the work loading device 11 and the work unloading device 12 are arranged within the width of the machine body cover 3. This results in a compact configuration having a generally neat appearance.

Furthermore, the concave portions 25, 26 for loading and unloading are formed in the machine body cover 3. The work rests 23 of the work loading device 11 and work unloading device 12 can be moved into and out of the concave portions 25, 26, respectively. Consequently, the work W can be supplied to or discharged from the lathe 1 simply by supplying or discharging the work W to or from the concave portion 25, 26, opened in the machine body cover 3. Therefore, the work W can be easily supplied and discharged.

## Claims

1. A spindle pickup lathe comprising a spindle chuck (6) that supports a work (W) so that the work faces downward, tool supporting means (7) provided in a machining area (R) to machine the work supported by the spindle chuck, spindle moving means for moving the spindle chuck in a vertical direction and in a lateral direction, and a work loading device (11) and a work unloading device (12) provided in an area in which the spindle chuck moves in the lateral direction, the spindle pickup lathe being **characterized in that** the work loading device and the work unloading device are provided at different positions and each of the work loading device and the work unloading device comprises a work rest (23) and a rest position switching mechanism (24) that switches a position of the work rest between an interior and exterior of the machining area, and the spindle chuck moves in the vertical and lateral directions to pick up the work from the work loading device, subjects the work to machining carried out by the tool supporting means, and delivers the work to the work unloading device.

2. A spindle pickup lathe according to Claim 1, **characterized in that** the work loading device (11) and the work unloading device (12) are arranged on respective sides of the machining area (R) in the lateral direction.

3. A spindle pickup lathe according to Claim 1 or Claim 2, **characterized in that a** generally rectangular machine body cover (3) is provided which covers the machining area, and a concave portion (25, 26) is formed which extends from each lateral end to center of the machine body cover, and **in that** the work loading device and the work unloading device are arranged within the width of the machine body cover, and the work rest can be moved into and out of the concave portion.

## Patentansprüche

1. Spindelpickupdrehmaschine, bestehend aus einem Spindelspannfutter (6), das ein Werkstück (W) derart trägt, dass das Werkstück nach unten gerichtet ist, einer Werkstückhalterung (7), die in einem Maschinenbereich (R) zum Bearbeiten des um das Spindelspannfutter gehaltenen Werkstücks angeordnet ist, einer Spindelverstelleinrichtung zum Verstellen des Spindelspannfutters in einer vertikalen und in einer seitlichen Richtung, und einer Werkstückladevorrichtung (11) und einer Werkstückentladevorrichtung (12), die in einem Bereich angeordnet sind, in dem sich das Spindelspannfutter in der seitlichen Richtung bewegt,
**dadurch gekennzeichnet, dass**
die Werkstückladevorrichtung und die Werkstückentladevorrichtung an unterschiedlichen Stellen angeordnet sind, und die Werkstückladevorrichtung und die Werkstückentladevorrichtung jeweils einen Werkstückhalter (23) und einen Halterpositionsschaltmechanismus (24), der die Position des Werkstückhalters zwischen innerhalb und außerhalb des Bearbeitungsbereichs umschaltet, aufweisen, und sich das Spindelspannfutter in der vertikalen und der seitlichen Richtung bewegt, um das Werkstück von der Werkstückladevorrichtung aufzunehmen, das Werkstück der Bearbeitung zuführt, die vom Werkstückhalter durchgeführt wird, und das Werkstück an die Werkstückentladevorrichtung abgibt.

2. Spindelpickupdrehmaschine nach Anspruch 1,
**dadurch gekennzeichnet, dass**
die Werkstückladevorrichtung (11) und die Werkstückentladevorrichtung (12) an den jeweiligen Seiten des Bearbeitungsbereichs (R) in der seitlichen Richtung angeordnet sind.

3. Spindelpickupdrehmaschine nach Anspruch 1 oder 2,
**dadurch gekennzeichnet, dass**
eine etwa rechteckige Maschinenkörperabdeckung (3) vorgesehen ist, die den Bearbeitungsbereich abdeckt, und ein konkaver Abschnitt (25, 26) gebildet ist, der sich von jedem Seitenende zur Mitte der Maschinenkörperabdeckung erstreckt, und dass die Werkstückladevorrichtung und die Werkstückentladevorrichtung innerhalb der Breite der Maschinenkörperabdeckung angeordnet sind, und dass der Werkstückhalter in den und aus dem konkaven Abschnitt verstellt werden kann.

## Revendications

1. Tour avec prise de pièce par la broche comprenant un mandrin de broche (6) qui supporte une pièce (W) de façon que la pièce soit dirigée vers le bas, un moyen de support d'outil (7) réalisé dans une zone d'usinage (R) pour usiner la pièce supportée par le mandrin de broche, un moyen de déplacement de broche pour déplacer le mandrin de broche dans une direction verticale et dans une direction latérale, et un dispositif de chargement de pièce (11) et un dispositif de déchargement de pièce (12) réalisés dans une zone dans laquelle le mandrin de broche se déplace dans la direction latérale, la tour avec prise de pièce par la broche étant **caractérisée en ce que** le dispositif de chargement de pièce et le dispositif de déchargement de pièce sont réalisés à des positions différentes et **en ce que** chacun du dispositif de chargement de pièce et du dispositif de déchargement de pièce comprend un support de pièce (23) et un mécanisme de commutation de position de support (24) qui commute une position du support de pièce entre un intérieur et un extérieur de la zone d'usinage, et le mandrin de broche se déplace dans les directions verticale et latérale pour saisir la pièce du dispositif de chargement de pièce, soumet la pièce à l'usinage exécuté par le moyen de support d'outil et transmet la pièce au dispositif de déchargement de pièce.

2. Tour avec prise de pièce par la broche selon la revendication 1, **caractérisée en ce que** le dispositif de chargement de pièce (11) et le dispositif de déchargement de pièce (12) sont agencés sur les cRtés respectifs de la zone d'usinage (R) dans la direction latérale.

3. Tour avec prise de pièce par la broche selon la revendication 1 ou la revendication 2, **caractérisée en ce qu'**un recouvrement de corps de machine généralement rectangulaire (3) est prévu qui couvre la zone d'usinage, et une portion concave (25, 26) est formée qui s'étend de chaque extrémité latérale au centre du recouvrement du corps de machine, et **en ce que** le dispositif de chargement de pièce et le dispositif de déchargement de pièce sont agencés dans la largeur du recouvrement du corps de machine, et le support de pièce peut être introduit dans et sorti de la portion concave.
